**Europäisches Patentamt**

**European Patent Office**

**Office européen des brevets**

(19)

(11) Veröffentlichungsnummer: **0 252 329**
**B1**

(12) EUROPÄISCHE PATENTSCHRIFT

(45) Veröffentlichungstag der Patentschrift:
24.01.90

(51) Int. Cl.⁴: **B01D 53/34**

(21) Anmeldenummer: 87108511.4

(22) Anmeldetag: 12.06.87

(54) Verfahren zum Entfernen von Stickoxyden aus Abgasen.

(30) Priorität: 10.07.86 DE 3623168

(43) Veröffentlichungstag der Anmeldung:
13.01.88 Patentblatt 88/2

(45) Bekanntmachung des Hinweises auf die Patenterteilung:
24.01.90 Patentblatt 90/4

(84) Benannte Vertragsstaaten:
AT CH DE FR IT LI NL SE

(56) Entgegenhaltungen:
DE-A- 3 233 316
DE-B- 2 625 005

**Die Akte enthält technische Angaben, die nach dem Eingang der Anmeldung eingereicht wurden und die nicht in dieser Patentschrift enthalten sind.**

(73) Patentinhaber: WALTHER & CIE.
AKTIENGESELLSCHAFT, Waltherstrasse 51,
D-5000 Köln 80 (Dellbrück)(DE)

(72) Erfinder: Bechthold, Horst, Dr.-Ing., Kiefernweg 10,
D-5042 Erftstadt-Friesheim (23)(DE)
Erfinder: Schulte, Wolfgang, Dürer Weg 16,
D-4019 Monheim(DE)

(74) Vertreter: Hattwig, Henning, Dr., Krupp-Koppers GmbH
Patentabteilung Altendorfer
Strasse 120 Postfach 10 22 51, D-4300 Essen 1(DE)

## Beschreibung

Die Erfindung betrifft ein Verfahren zum Entfernen von Stickoxyden aus Abgasen, wie es im Oberbegriff des Patentanspruches beschrieben ist.

Mit einem Verfahren nach der DE-A 32 33 316 ist es gelungen, Stickoxyde unter Einsatz von Ozon zu $NO_2$ zu oxidieren und diese bei pH-Werten von 5 - 10 in ammoniakalischer Lösung zu absorbieren. Bei dieser Verfahrensweise entsteht zwangsläufig ein gewisser Anteil an Ammoniumnitrit, der durch seine Tendenz zu thermischer Zersetzung bei bestimmten pH-Werten ein gewisses Risiko in der Prozeßdurchführung beinhaltet. Hinzu kommt, daß die störende Ammoniumnitritbildung einen zusätzlichen Aufwand in der Nachoxidation verursacht.

Der Erfindung liegt die Aufgabe zugrunde nur Stickoxyde abzuscheiden und gleichzeitig ein Nitrat herzustellen.

Diese Aufgabe wird dadurch gelöst, daß der Absorptionsstufe zum Absorbieren des $NO_2$ zur Einstellung eines pH-Wertes zwischen 3,0 und 7,0, vorzugsweise zwischen 3,5 und 5,5, eine entsprechende Menge Ammoniak bzw. eine Calcium- oder Natriumverbindung zugeführt wird.

Überraschenderweise hat sich gezeigt, daß das bei der Oxidation mit Ozon gebildete $NO_2$ auch bei pH-Werten weit unter den bekannten Bereichen absorbiert werden kann und mit Ammoniak oder dergleichen dann direkt zum Ammoniumnitrat oder dergleichen reagiert.

In der Waschlösung des erfindungsgemäßen Verfahrens, d.h. bei einer Betriebsweise mit pH-Werten zwischen 3,5 und 5,5 wurden Nitritkonzentrationen von weniger als 5 mg/l - also eine völlig ungefährliche Konzentration - festgestellt.

Damit kann erfindungsgemäß die Nitritbildung praktisch vollständig verhindert werden. Etwa gebildetes Nitrit, beispielsweise Ammoniumnitrit, kann noch einer weiteren Oxidationsstufe unterzogen werden. Bei den niedrigen Nitritkonzentrationen ist es nicht unbedingt erforderlich. Somit hat die Erfindung noch den Vorteil, daß auf eine nachfolgende Oxidation verzichtet werden kann.

Das in der Gasphase zugegebene $O_3$ bewirkt eine Oxidation von $NO_x$ zu $NO_2$, das sich mit einfachsten Mitteln bei niedrigeren Temperaturen nach Zugabe von Ammoniak bzw. einer Calcium- oder Natriumverbindung in der Absorptionsstufe auswaschen läßt. In der DE-A 3233316 ist dargelegt, welche Reaktionen ablaufen.

Für die gezielte $NO_x$-Entfernung in der Absorptionsstufe wird der pH-Wert bevorzugt zwischen 3,5 und 5,5 eingestellt, so daß das durch die Oxidation mit Ozon aus NO gebildete $NO_2$ zu den gewünschten einstellbaren Prozentsätzen ausgewaschen wird. Die Wäscherlösung der erfindungsgemäßen Absorptionsstufe enthält bei Zugabe von Ammonium somit nur noch Ammoniumnitrat und nur unbedeutende Mengen an Ammoniumnitrit. Die übrigen nicht genannten Parameter entsprechen den in der DE-A 3233316 genannten Angaben.

## Patentansprüche

Verfahren zum Entfernen von Stickoxyden aus Abgasen, bei dem die Abgase mit den Stickoxyden zum Absorbieren der Stickoxyde mit einer im Kreislauf geführten Absorptionsflüssigkeit, in der das verdampfte Wasser durch eine entsprechende Frischwassermenge ersetzt wird, behandelt werden, wobei die von den Stickoxyden zu befreienden Abgase zur Oxidation der in den Abgasen enthaltenen Stickoxyde in der Gasphase mit Ozon in einer Menge beaufschlagt werden, die dem gewünschten $NO_2$-Abscheidegrad entspricht, daß das gebildete $NO_2$ in einer nachgeschalteten Absorptionsstufe unter vorheriger Zugabe von Ammoniak bzw. Calcium-oder Natriumverbindungen absorbiert und das hierbei entstandene Absorptionsprodukt in einer nachgeschalteten Oxidationsstufe mit einem weiteren Oxidationsmittel zu Ammoniumnitrat bzw. Calcium- oder Natriumnitrat oxidiert wird und sodann als Lösung einem Einspritzverdampfer mit nachfolgender Pelletierung oder einer Kristallisationsanlage zugeführt wird, dadurch gekennzeichnet, daß der Absorptionsstufe zum Absorbieren des $NO_2$ zur Einstellung eines pH-Wertes zwischen 3,0 und 7,0, vorzugsweise zwischen 3,5 und 5,5, eine entsprechende Menge Ammoniak bzw. eine Calcium- oder Natriumverbindung zugeführt wird.

## Claims

Process for the removal of nitrogen oxides from waste gases, in which the waste gases containing the nitrogen oxides are treated with a circulated absorption fluid to absorb the nitrogen oxides, in which fluid the evaporated water is replaced by a corresponding quantity of fresh water, ozone being added to the waste gases to be freed from the nitrogen oxides in the gas phase to oxidise the nitrogen oxides contained in the waste gases, the amount of ozone, corresponding to the desired degree of separation of $NO_2$, such that the $NO_2$ formed is absorbed in a subsequent absorption stage, ammonia or calcium compounds or sodium compounds having previously been added, and the absorption product obtained in this process is oxidised in a subsequent oxidation stage using a further oxidising agent to form ammonium nitrate or calcium nitrate or sodium nitrate and is then fed as a solution to an injection evaporator with subsequent pelletising or to a crystallisation plant, characterized in that, for setting a pH between 3.0 and 7.0, preferably between 3.5 and 5.5, a corresponding quantity of ammonia or a calcium compound or sodium compound is fed to the absorption stage to absorb of the $NO_2$.

## Revendications

Procédé pour l'élimination d'oxydes d'azote à partir de gaz d'échappement, dans lequel les gaz d'échappement sont traités conjointement avec les oxydes d'azote pour l'absorption des oxydes d'azote avec un liquide d'absorption que l'on fait circuler, dans lequel l'eau évaporée est remplacée par une quantité d'eau fraîche correspondante, les gaz d'échappement à débarrasser des oxydes d'azote étant alimentés, pour l'oxydation des oxydes d'azote contenus dans les gaz d'échappement, en phase gazeuse, avec de l'ozone dans une quantité qui correspond au taux de séparation de $NO_2$ souhaité, de telle sorte que le $NO_2$ qui se forme est absorbé dans un étage d'absorption placé en aval, avec addition préalable d'ammoniac ou de composés de calcium ou de sodium, et que le produit d'absorption qui s'est formé ici est oxydé dans un étage d'oxydation placé en aval, avec un autre agent d'oxydation, pour obtenir du nitrate d'ammonium ou du nitrate de calcium ou de sodium, puis conduit sous forme de solution à un évaporateur par pulvérisation avec pelletisation subséquente ou à une installation de cristallisation, caractérisé par le fait que l'on introduit dans l'étage d'absorption du $NO_2$, pour ajuster le pH à une valeur située entre 3,0 et 7,0, de préférence entre 3,5 et 5,5, une quantité correspondante d'ammoniac ou d'un composé de calcium ou de sodium.